# EUROPEAN PATENT APPLICATION

(11) **EP 2 859 819 A1**
(43) Date of publication of application: **15.04.2015**
(21) Application number: 14188210.0
(22) Date of filing: 08.10.2014
(51) Int. Cl.: A47J 31/36, A47J 31/44

(54) **Dispensing device of capsule coffee machine**

(30) Priority: 14.10.2013 CN 201320632599 U
(71) Applicant: Tsann Kuen (Zhangzhou) Enterprise Co., Ltd., Fujian 363107 (CN)
(72) Inventor: Zhang, Yan-Xiang, code: 363107 Zhangzhou Fujian (CN)
(74) Representative: Cordina, Kevin John

(57) **Abstract**

A dispensing device (1) includes a fixed seat (2) defining an accommodation space (24), a sliding seat (3) slidable relative to the fixed seat (2), a dispensing frame (4) mounted pivotally on the sliding seat (3), and a pivot seat (5) pivoted to the fixed seat (2) and having at least one push-pull rod (511) and at least one control member (523). When the dispensing device (1) is shifted from a brewing to a dispensing position, the pivot seat (5) pivots relative to the fixed seat (2), the dispensing frame (4) is driven to an inclined position by the control member (523) so that a coffee capsule (10) supported on the dispensing frame (4) can slide out of the dispensing frame (4), and the sliding seat (3) is driven by the push-pull rod (523) to slide out of the accommodation space (24).

## Description

The invention relates to a capsule coffee machine, more particularly to a dispensing device of a capsule coffee machine that can receive a coffee capsule and that can dispense the coffee capsule after use.

Conventionally, to brew coffee, it is necessary to grind first the coffee beans into powder using a grinding machine, after which a coffee machine is used for brewing and filtering. To make the coffee simpler and to maintain its flavor, there exists in the market a capsule coffee machine which uses a coffee capsule. The coffee capsule mainly contains ground coffee with a stable flavor sealed in a capsule. During brewing, the coffee capsule is pierced by the capsule coffee machine, after which hot water is poured into the capsule. Hence, a coffee beverage having a stable flavor can be obtained. Because the amount of brewed coffee using the coffee capsule is limited, the coffee capsule must be frequently changed during use thereof. Further, during use of the coffee capsule, a high operating temperature is necessary, so that the temperature around the coffee capsule is always high, and the coffee capsule cannot just be removed from or placed on the machine using a bare hand. A special tool is required. Thus, operation of the existing capsule coffee machine is inconvenient, and removal/placement of the coffee capsule is also dangerous.

Therefore, an object of the present invention is to provide a dispensing device that is capable of overcoming the aforesaid drawbacks of the prior art.

According to this invention, a dispensing device of a capsule coffee machine comprises a carrier unit, a dispensing frame, and a pivot seat. The carrier unit includes a fixed seat defining an accommodation space, and a sliding seat mounted in the accommodation space and slidable relative to the fixed seat along a sliding direction. The dispensing frame is used for supporting and dispensing a coffee capsule. The dispensing frame is mounted pivotally on the sliding seat, and has a guide space. The pivot seat is connected pivotally to the fixed seat, and has at least one push-pull rod and at least one control member. When the dispensing device is disposed in a brewing position, the pivot seat covers the dispensing frame and the sliding seat. When the dispensing device is shifted from the brewing position to a dispensing position, the pivot seat pivots relative to the fixed seat, the dispensing frame is simultaneously driven to an inclined position relative to the sliding seat by the control member so that the coffee capsule supported on the dispensing frame can slide out of the dispensing frame, and the sliding seat is driven by the push-pull rod to slide out of the accommodation space along the sliding direction.

Other features and advantages of the present invention will become apparent in the following detailed description of the embodiment with reference to the accompanying drawings, of which:
Fig. 1 is an exploded perspective view of a dispensing device according to the embodiment of the present invention;
Fig. 2 is a partly sectional assembled perspective view of the embodiment, illustrating the dispensing device being moved to a dispensing position;
Fig. 3 is a schematic top view of the embodiment;
Fig. 4 is a sectional view of the embodiment taken along line IV-IV of Fig. 3, illustrating the dispensing device in a brewing position;
Fig. 5 is an exploded perspective view of a dispensing frame and an opening/closing mechanism of the dispensing device;
Fig. 6 is a schematic side view of the embodiment, illustrating the opening/closing mechanism in an unlocking position;
Fig. 7 is a sectional view of the embodiment taken along line VII-VII of Fig. 3;
Fig. 8 is a view similar to Fig. 6, but with a handle of the opening/closing mechanism being pulled upward to pivot a first locking member;
Fig. 9 is a view similar to Fig. 6, but illustrating the first and second locking members of the opening/closing mechanism in a locking position; and
Fig. 10 illustrates successive operation steps of the dispensing frame.

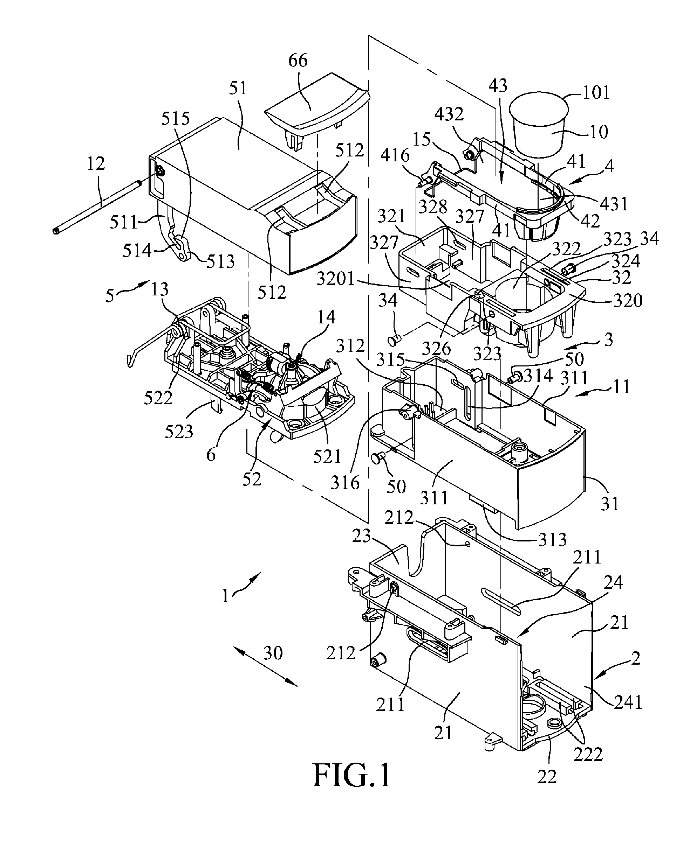

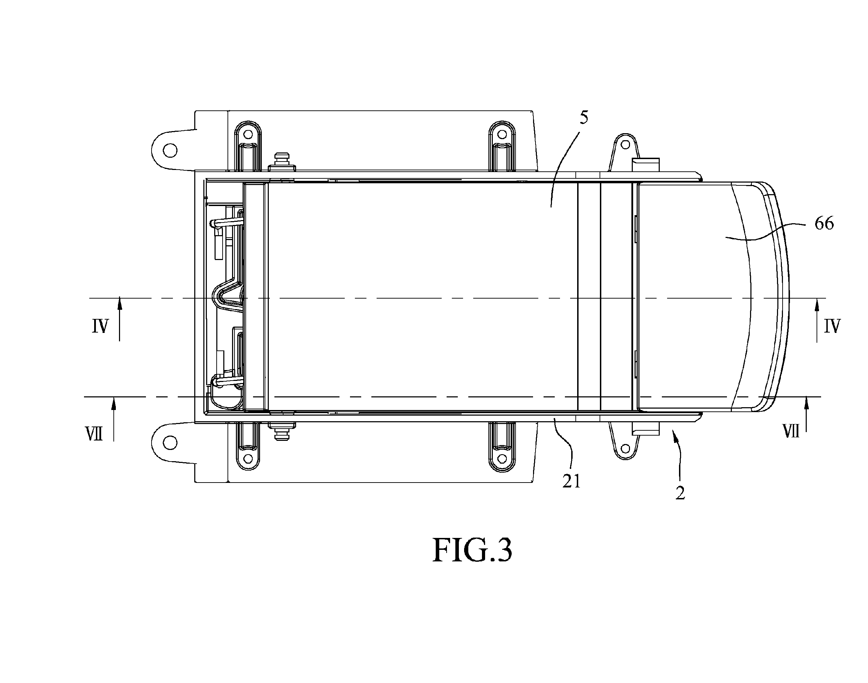

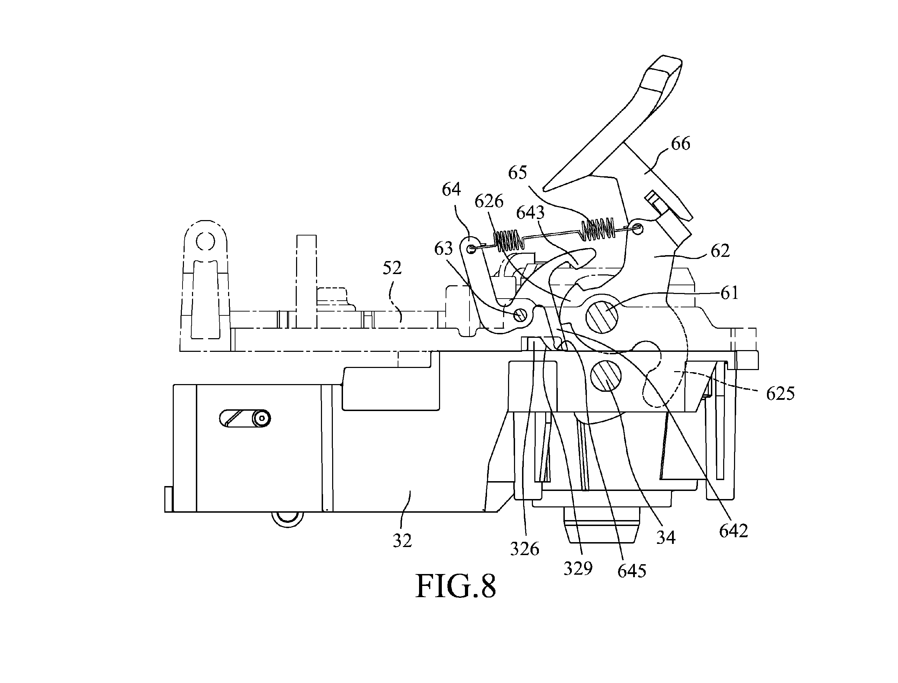

Referring to Figs. 1 to 10, a dispensing device 1 according to the embodiment of the present invention is used for receiving/dispensing a coffee capsule 10 and for mounting a brewing mechanism 14 of a capsule coffee machine (not shown) thereto. The coffee capsule 10 has an annular flange 101 projecting outward from a top periphery thereof. The coffee capsule 10 can automatically fall out of the dispensing device 1 after being brewed by the brewing mechanism 14. The dispensing device 1 of this embodiment comprises a carrier unit 11, a dispensing frame 4, a return spring 15, a pivot seat 5, a main shaft 12, a torsion spring 13, and an opening/closing mechanism 6.

The carrier unit 11 includes a fixed seat 2 and a sliding seat 3. The fixed seat 2 includes two parallel fixed sidewalls 21 spaced apart in a left-right direction, a fixed bottom wall 22 interconnecting bottom ends of the fixed sidewalls 21, a rear wall 23 interconnecting rear ends of the fixed sidewalls 21, and an accommodation space 24 defined by the fixed sidewalls 21, the fixed bottom wall 22 and the rear wall 23. The sliding seat 3 is mounted in the accommodation space 24 and is slidable relative to the fixed seat 2 along a sliding direction 30. The accommodation space 24 has an open end 241 opposite to the rear wall 23. Each fixed sidewall 21 has a limiting slot 211 extending along the sliding direction 30, and a pivot hole 212 disposed above the limiting slot 211 and proximate to the rear wall 23. The fixed bottom wall 22 has a first dropping hole 221, and a plurality of fixed guide rails 222 between the first dropping hole 221 and the open end 241.

The sliding seat 3 includes a rectangular main frame 31, and a carrier frame 32 disposed in the main frame 31. The main frame 31 has two sliding sidewalls 311 respectively proximate to the fixed sidewalls 21, a sliding bottom wall 312 interconnecting bottom ends of the sliding sidewalls 311, and a plurality of sliding guide rails 313 projecting downward from the sliding bottom wall 312 and respectively cooperating with the fixed guide rails 222. Each sliding sidewall 311 has a slide guide slot 314 extending in a top-bottom direction, an outer guide hole 315 proximate to a rear top side of the slide guide slot 314 and extending along the sliding direction 30, and a limiting pin 316 projecting outwardly therefrom and extending into a respective one of the limiting slots 211. The lengths of the limiting slots 211 limit a sliding path of the sliding seat 3. In this embodiment, the sliding path is about 25∼30 mm.

The carrier frame 32 includes a front capsule-carrying portion 320, and a dropping portion 321 disposed at a rear side of the capsule-carrying portion 320. The capsule-carrying portion 320 has two side frames 323 spaced apart in the left-right direction and extending along the sliding direction 30, and a chamber 322 formed between the side frames 323 and extending in the top-bottom direction. Each side frame 323 has an elongated through hole 324 formed in a top face thereof and extending along the sliding direction 30. The capsule-carrying portion 320 further has an unlocking piece 326 projecting from the top face of one of the side frames 323 rearwardly of the through hole 324. The unlocking piece 326 has a first inclined face 329 extending upwardly, inclinedly and rearwardly from the top face of the one of the side frames 323. The dropping portion 321 has two parallel inner sidewalls 327 spaced apart in the left-right direction, and a bottom wall 3201 interconnecting bottom ends of the inner sidewalls 327. Each inner sidewall 327 has an inner guide hole 328 proximate to a rear end thereof and extending along the sliding direction 30. The inner guide hole 328 in each inner sidewall 327 corresponds in position to the outer guide hole 315 of a respective sliding sidewall 311.

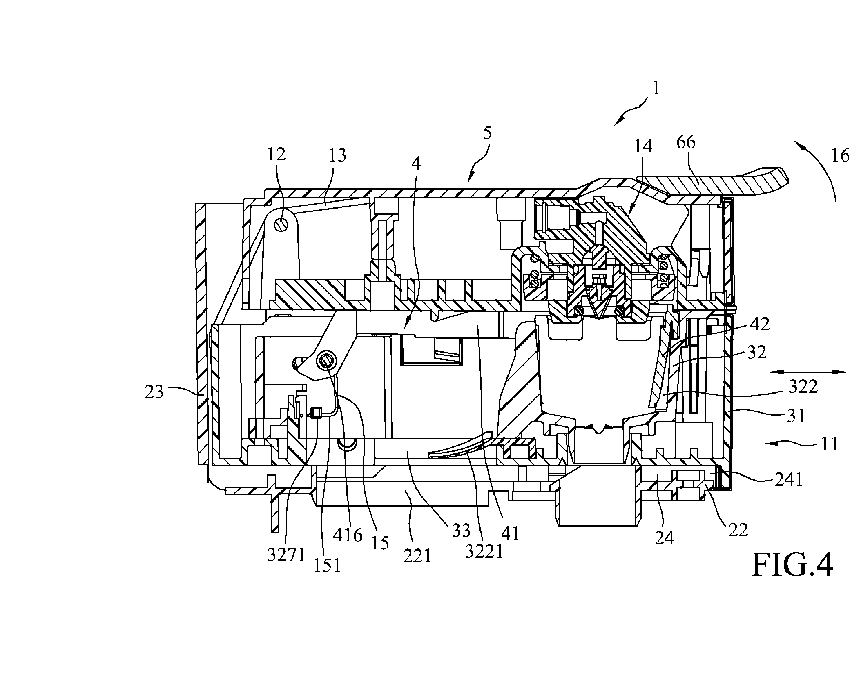

The sliding seat 3 further includes a second dropping hole 33 (see Fig. 4) extending through the bottom wall 3201 of the dropping portion 321 and the sliding bottom wall 312 of the main frame 31, and two engaging pins 34 respectively mounted on the side frames 323 and proximate to the through holes 324. The second dropping hole 33 is proximate to rear ends of the main frame 31 and the carrier frame 32, and is disposed above and registered with the first dropping hole 221.

With reference to Figs. 1, 4 and 5, the dispensing frame 4 is mounted pivotally on the sliding seat 3, and includes two spaced-apart side rods 41 extending along the sliding direction 30, a connecting rod 42 interconnecting front ends of the side rods 41, and a guide space 43 defined by the side rods 41 and the connecting rod 42. Each side rod 41 has a main body portion 411, a pulled portion 412 projecting outward from a top end of the main body portion 411, a projection portion 413 projecting outward from the main body portion 411 forwardly of the pulled portion 412, a notch 414 formed between the pulled portion 412 and the projection portion 413, and a pivot pin 416 projecting outward from the main body portion 411 in proximity to a rear end thereof.

The return spring 15 is used for returning the dispensing frame 4 to its original horizontal position on the sliding seat 3, and has two opposite ends respectively connected to the pivot pins 416 of the side rods 41, and an intermediate section 151 secured to retaining portions 3271 of the inner sidewalls 327. The pulled portion 412 has an inclined surface 417 extending downwardly and inclinedly from a top of the main body portion 411. The pivot pin 416 extends through one of the inner guide holes 328 and the corresponding outer guide hole 315.

After assembly, the dispensing frame 4 can pivot about the pivot pins 416 of the side rods 41, and can move forward through the biasing force of the return spring 15. The guide space 43 has a capsule-supporting region 431 defined by the connecting rod 42, and a capsule-dropping region 432 defined by the side rods 41 and having a width larger than an outer diameter of the annular flange 101 of the coffee capsule 10. The capsule-dropping region 432 is located above and communicates with the first and second dropping holes 221, 33. The coffee capsule 10 is supported on the connecting rod 42 and is disposed across the capsule-supporting region 431. When the dispensing frame 4 is moved from its original horizontal position to an inclined position relative to the sliding seat 3, the coffee capsule 10 will slide from the capsule-supporting region 431 to the capsule-dropping region 432 and fall out of the dispensing device 1 via the corresponding second and first dropping holes 33, 221 by gravity.

The pivot seat 5 includes a brewing-supporting frame 52 for supporting the brewing mechanism 14, and a cover frame 51 mounted on and covering the brewing-supporting frame 52. The cover frame 51 includes two push-pull rods 511 symmetrically spaced apart in the left-right direction and extending downwardly, forwardly, and arcuately from a rear end thereof, and two insert holes 512 proximate to a front end thereof and spaced apart in the left-right direction. Each push-pull rod 511 has a push-pull end 513. The push-pull end 513 has a hooking groove 514 and an inclined end face 515. The brewing-supporting frame 52 has a mounting portion 521 proximate to a front end thereof for mounting of the brewing mechanism 14, a pivot-connecting portion 522 located at a rear end thereof, and two control members 523 projecting downward between the mounting portion 521 and the pivot-connecting portion 522 and spaced apart in the left-right direction. Each control member 523 has a hook end with an inclined surface 524 that extends upwardly and inclinedly from a bottom thereof.

The main shaft 12 extends through the cover frame 51, the pivot-connecting portion 522 of the brewing-supporting frame 52, and the pivot holes 212 in the fixed seat 2 so as to pivotally connect the pivot seat 5 to the fixed seat 2. The torsion spring 13 is sleeved on the main shaft 12, and biases the pivot seat 5 to pivot along the opening direction 16. The pivot seat 5 further includes two sliding pins 50 each extending through a through hole in the push-pull end 513 of one of the push-pull rods 511 and the slide guide slot 314 of the corresponding sliding sidewall 311. When the pivot seat 5 pivots, the sliding seat 3 is driven to move reciprocally along the sliding direction 30.

With reference to Figs. 1, 5 and 6, the opening/closing mechanism 6 is used to engage and disengage the pivot seat 5 to and from the fixed seat 2. That is, by using the opening/closing mechanism 6, the pivot seat 5 and the carrier unit 11 can be engaged to each other to ensure corresponding relation between the coffee capsule 10 and the brewing mechanism 14, so that the brewing operation can progress smoothly. In this embodiment, the opening/closing mechanism 6 includes a first locking member 62, a second locking member 64, a locking spring 65, and a handle 66.

The first locking member 62 is pivotally mounted on the brewing-supporting frame 52 by two first pivot pins 61, and includes two locking plates 621 spaced apart in the left-right direction and respectively extending into the through holes 324 of the side frames 323, and a connecting plate 622 connected between the locking plates 621. Each locking plate 621 includes a pivot-connecting portion 623 for extension of one of the first pivot pins 61 therethrough, a first spring pulling portion 624 extending from the pivot-connecting portion 623 to connect with one end of the connecting plate 622, an engaging portion 625 extending from the pivot-connecting portion 623 toward one of the engaging pins 34, and a first retaining portion 626 protruding from the pivot-connecting portion 623 in a direction away from the engaging portion 625.

The second locking member 64 is pivotally mounted on the brewing-supporting frame 52 by a second pivot pin 63, and includes a pivot-connecting portion 641 for extension of the second pivot pin 63 therethrough, an unlocking portion 642 extending from the pivot-connecting portion 641 toward the unlocking piece 326, a second retaining portion 643 extending from the pivot-connecting portion 641 toward the first retaining portion 626 of one of the locking plates 621, and a second spring pulling portion 644 extending upward from the pivot-connecting portion 641. The second spring pulling portion 644 and the second retaining portion 643 are disposed on two opposite sides of the second pivot pin 63. The unlocking portion 642 has a second inclined face 645 cooperating with the first inclined face 329. Two opposite ends of the locking spring 65 are respectively hooked to the second spring pulling portion 644 and the first spring pulling portion 624 of the one of the locking plates 621 to urge the first and second locking members 62, 64 to move toward a locking position in which the first and second retaining portions 626, 643 are engaged.

In this embodiment, the handle 66 is used to control pivoting of the first locking member 62, and includes an operating plate 661 protruding forwardly from the pivot seat 5, and two spaced-apart clamping plates 662 projecting downward from the operating plate 661 into the insert slots 512 of the pivot seat 5, respectively. Each clamping plate 662 has a clamping groove 663 clampingly receiving the connecting plate 622.

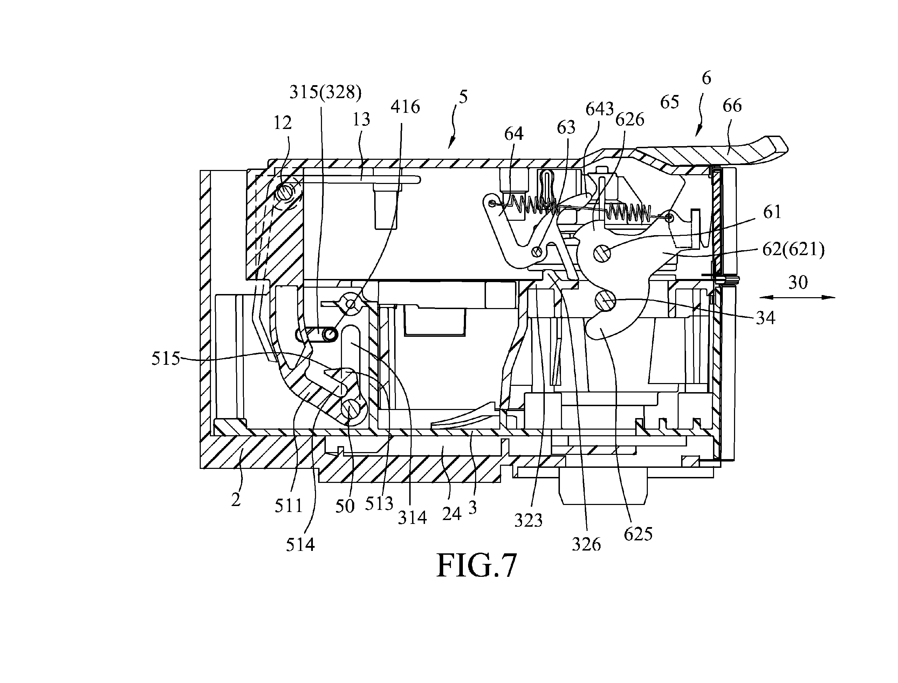

When the dispensing device 1 is disposed in a brewing position, as shown in Figs. 4 and 7, the annular flange 101 of the coffee capsule 10 is supported on the connecting rod 42 of the dispensing frame 4 and is in the capsule-supporting region 431 of the guide space 43. Further, the pivot seat 5 covers the dispensing frame 4 and the sliding seat 3, the torsion spring 13 stores a biasing force, and the push-pull ends 513 of the push-pull rods 511 are respectively spaced apart from the pivot pins 416 of the side rods 416. At this time, the opening/closing mechanism 6 is in an unlocking position, in which the first and second retaining portions 626, 643 are disengaged, while the second engaging portions 625 of the locking plates 621 are respectively engaged to the engaging pins 34 of the sliding seat 3. Thus, the pivot seat 5 is firmly engaged to the sliding seat 3. Brewing of coffee can be operated at this time. On the other hand, because the unlocking portion 642 of the second locking member 64 is pushed by the unlocking piece 223 to move to abut against a top face of the side frame 323 with the unlocking piece 223, the second locking member 64 can overcome a resilient force of the locking spring 65.

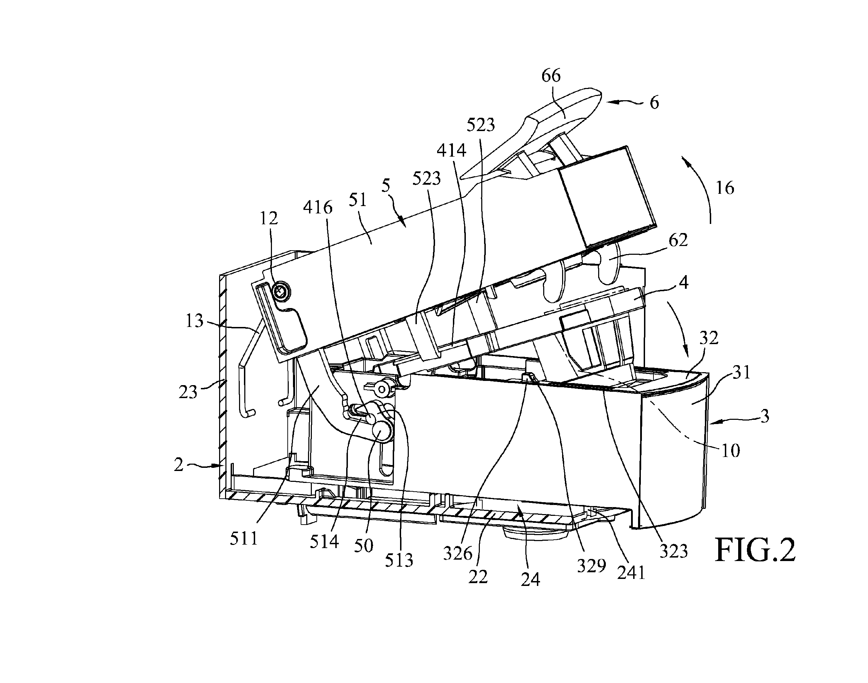

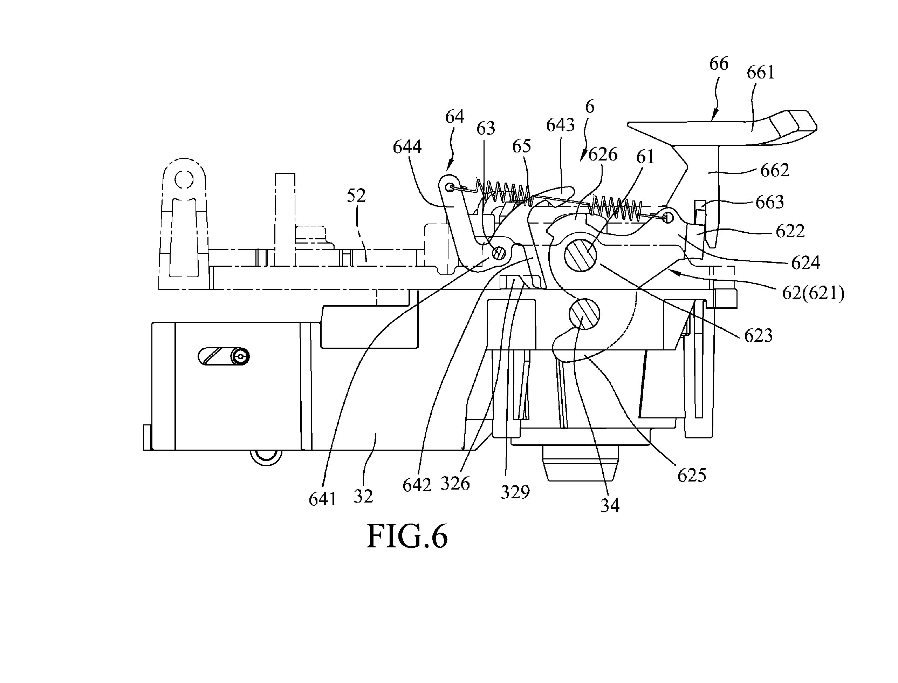

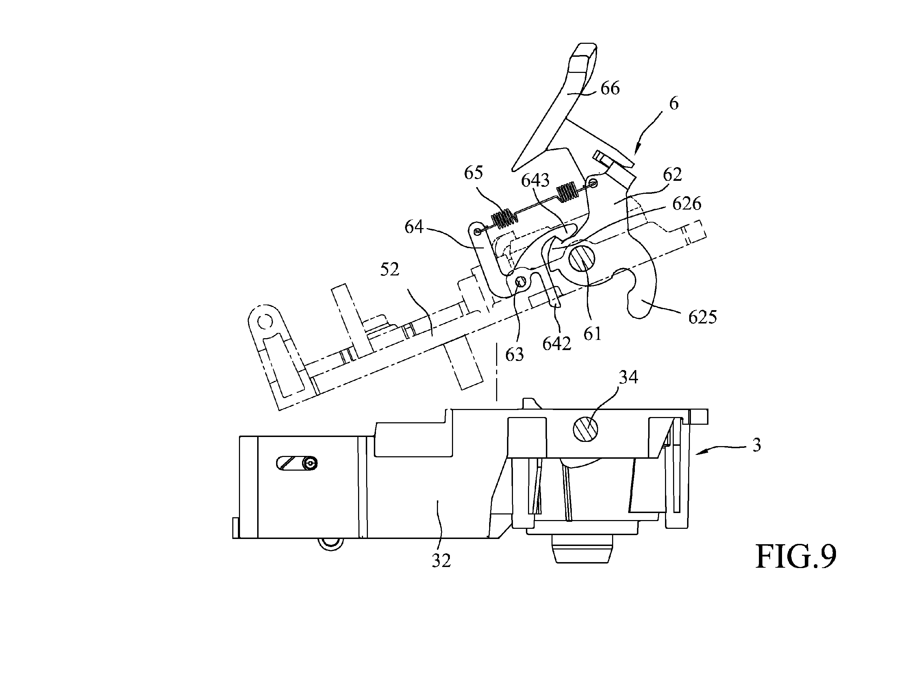

With reference to Figs. 2, 8 and 9, after brewing of the coffee capsule 10 is completed, to shift the dispensing device 1 from the brewing position shown in Fig. 7 to a dispensing position, the handle 66 is first pulled along the opening direction 16 to pivot the first locking member 62 about the first pivot pins 61. When the second engaging portions 625 of the first locking member 62 are respectively disengaged from the engaging pins 34, because the stored biasing force of the torsion spring 5 is released, the pivot seat 5 is biased by the torsion spring 5 to pivot about the main shaft 12 toward the opening direction 16. During the upward and rearward pivoting of the pivot seat 5 along the opening direction 16, the following three actions are generated:
1) In following the upward movement of the pivot seat 5, the unlocking portion 642 of the second locking member 64 will move away from the side frame 323 of the carrier unit 11. At this moment, the locking spring 65 will pull the second spring pulling portion 644 of the second locking member 64 and the first spring pulling portion 624 of the primary locking plate 621 toward each other until the first and second retaining portions 626, 643 are engaged, thereby switching the first and second locking members 62, 64 from the unlocking position shown in Fig. 6 to a locking position shown in Fig. 9.
2) With reference to Figs. 1, 2, 7 and 10, on the other hand, the sliding pins 50 that are connected to the push-pull rods 511 of the pivot seat 5 will move upward along the slide guide slots 314 of the sliding seat 3, and the sliding seat 3 together with the dispensing frame 4 is pushed outwardly and forwardly by the push-pull rods 511. That is, when the dispensing device 1 is shifted from the brewing position to the dispensing position, the sliding seat 3 will move forward along the sliding direction 30 and protrude from the accommodation space 24.
3) During the forward movement of the sliding seat 3 and the dispensing frame 4, the control members 523 of the pivot seat 5 will hook onto the pulled portions 412 of the side rods 41 of the dispensing frame 4. During pivoting of the pivot seat 5, the control members 523 will gradually move to the notches 414 of the dispensing frame 4. In this embodiment, when the dispensing frame 4 is inclined at an angle of approximately 40-45 degrees, movement of the sliding seat 3 is stopped, and the control members 523 are slid out of the notches 414. The sliding seat 3 protrudes from the fixed seat 2 at a distance of approximately 25-30 mm. Because the control members 523 are disengaged from the pulled portions 412, the dispensing frame 4 can be biased by the return spring 15 to pivot back to its original horizontal position on the sliding seat 3.

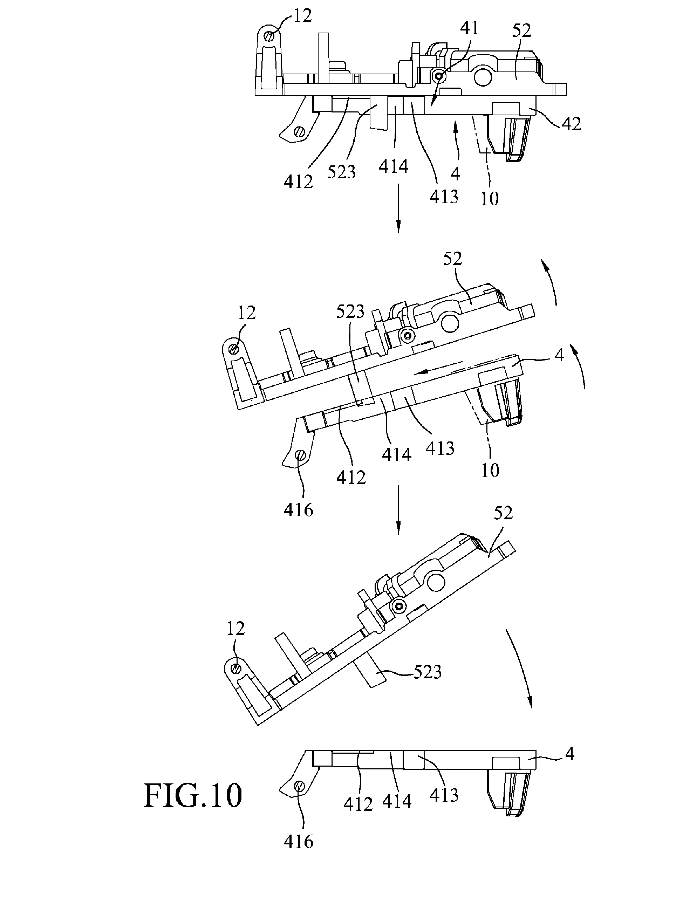

The successive operation steps of the dispensing frame 4 are clearly illustrated in Fig. 10.

During inclining of the dispensing frame 4, the push-pull end 513 of each push-pull rod 511 moves upward along with the respective sliding pin 50 until the inclined end face 515 thereof abuts against the respective pivot pin 416 and pushes the dispensing frame 4 to move rearward by overcoming the biasing force of the return spring 15. When each pivot pin 416 passes over the inclined end face 515 of the push-pull end 513 of the respective push-pull rod 511, each pivot pin 416 will move forward into the hooking groove 514 of the respective push-pull rod 511 due to the return force of the return spring 15 (see Fig. 2). Because of the actions of the push-pull rods 511, the pivot pins 416 are caused to move horizontally along the corresponding inner and outer guide holes 328, 315. When the dispensing device 1 is shifted from the dispensing position to the brewing position, the pivot pins 416 of the dispensing frame 4 are disengaged from the hooking grooves 514 of the push-pull rods 511 because of the downward movement of the push-pull rods 511 along with the pivot seat 5.

Further, during inclining of the dispensing frame 4, the coffee capsule 10 will slide from the capsule-supporting region 431 toward the capsule-dropping region 432 of the guide space 43. Since the capsule-dropping region 432 is located above the first and second dropping holes 221, 33, and since the width of the capsule-dropping region 432 is larger than the outer diameter of the annular flange 101 of the coffee capsule 10, the coffee capsule 10 can automatically fall off the capsule-dropping region 432 until a bottom portion of the coffee capsule 10 touches a projection 3221 that projects from a rear side of a bottom wall of the chamber 322, then turns upside down, and falls out of the dispensing device 1 via the second and first dropping holes 33, 221. Hence, automatic dispensing of the coffee capsule 10 can be achieved.

Moreover, when the dispensing device 1 is in the dispensing position, the dispensing frame 4 is pivoted above the sliding seat 3, and front sides of the sliding seat 3 and the dispensing frame 4 protrude from the accommodation space 24. Thus, another coffee capsule 10 can be easily placed on the connecting rod 42 of the dispensing frame 4, after which the pivot seat 5 is pressed downward with a force that overcomes the biasing force of the torsion spring 13, so that the pivot seat 5 and the sliding seat 3 can be moved to their original positions, as shown in Fig. 4. Another brewing operation can then be performed.

With reference to Figs. 7 to 9, because the opening/closing mechanism 6 is in the locking position when the dispensing device 1 is in the dispensing position, the engaging portions 625 of the first locking member 62 are spaced apart from and are disposed forwardly of the engaging pins 34 of the sliding seat 3. When the pivot seat 5 is pressed down along a direction opposite to the opening direction 16, in addition to using the push-pull rods 511 to pull the sliding seat 3 to retract into the accommodation space 24 of the fixed seat 2, the second engaging portions 625 of the first locking member 62 are also moved to lower fronts of the respective engaging pins 34.

As the unlocking portion 642 of the second locking member 64 approaches the unlocking piece 223 of the sliding seat 3, through pushing of the first inclined face 329 of the unlocking piece 326, the second locking member 64 can overcome the resilient force of the locking spring 65 so that the second locking member 64 cannot be moved to engage with the first locking member 62. The handle 66 is then pressed down to drive the first locking member 62 to pivot about the first pivot pins 61 and engage the engaging portions 625 with the respective engaging pins 34.

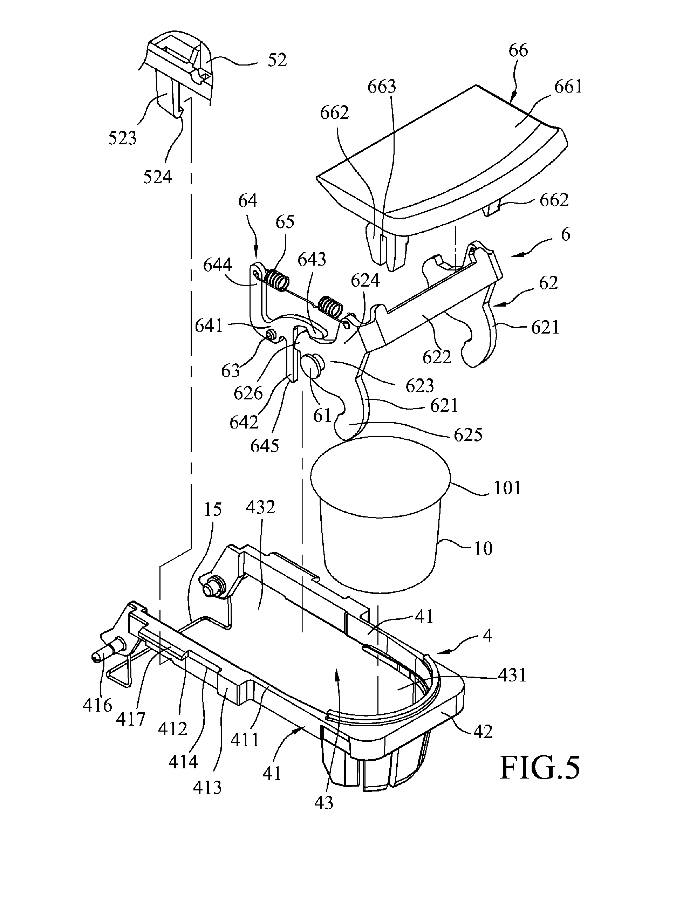

Through the first inclined face 329 of the unlocking piece 326 and the second inclined face 645 of the unlocking portion 642 of the second locking member 64, the second locking member 64 can be guided to pivot smoothly. Since the first and second inclined faces 329, 645 are non-vertical, buffering and friction-reducing effects can be achieved. With reference to Fig. 5, the inclined surfaces 524 of the control members 523 (only one is shown) of the pivot seat 5 and the inclined surfaces 417 of the pulled portions 412 of the side rods 41 can permit the control members 523 to smoothly pass through the pulled portions 412 and engage the same.

The opening/closing mechanism 6 of this invention is designed to coordinate with the torsion spring 13 to facilitate opening of the dispensing device 1. However, in actual practice, the opening/closing mechanism 6 may be dispensed. In this case, the pivot seat 5 may be directly pulled opened. Similarly, by using the structural coordination between the dispensing frame 4 and the sliding seat 3, the purpose of convenient and safe dispensing of the coffee capsule 10 may be achieved. Furthermore, a different structure of the opening/closing mechanism 6 may be used in this invention to engage the pivot seat 5 and the sliding seat 3. That is, the main focus of this invention is on the pivot seat 5 being able to drive the sliding seat 3 to slide forward and to perform dispensing at the same time when the pivot seat 5 is open.

From the aforesaid description, it is apparent that the dispensing device 1 of this invention can automatically drive the brewed coffee capsule 10 to move rearward and fall off from the dispensing frame 4, and finally out of the dispensing device 1 through the second and first dropping holes 33, 221. When the dispensing device 1 is in the dispensing position, the dispensing frame 4 will pivot to its original horizontal position to facilitate placing of the coffee capsule 10. The aforesaid structure is not only novel, but also has the effect of achieving simple and safe operations of removing and placing the coffee capsule 10 from and to the dispensing device 1.

## Claims

1. A dispensing device (1) of a capsule coffee machine, **characterized by**:
a carrier unit (11) including a fixed seat (2) defining an accommodation space (24), and a sliding seat (3) mounted in said accommodation space (24) and slidable relative to said fixed seat (2) along a sliding direction (30);
a dispensing frame (4) for supporting and dispensing a coffee capsule (10), said dispensing frame (4) being mounted pivotally on said sliding seat (3) and having a guide space (43); and
a pivot seat (5) connected pivotally to said fixed seat (2) and having at least one push-pull rod (511) and at least one control member (523);
wherein, when said dispensing device (1) is disposed in a brewing position, said pivot seat (5) covers said dispensing frame (4) and said sliding seat (3); and
wherein, when said dispensing device (1) is shifted from the brewing position to a dispensing position, said pivot seat (5) pivots relative to said fixed seat (2), said dispensing frame (4) is simultaneously driven to an inclined position relative to said sliding seat (3) by said control member (523) so that the coffee capsule (10) supported on said dispensing frame (4) can slide out of said dispensing frame (4), and said sliding seat (3) is driven by said push-pull rod (511) to slide out of said accommodation space (24) along the sliding direction (30).

2. The dispensing device (1) as claimed in Claim 1, **characterized in that** said guide space (43) of said dispensing frame (4) has a capsule-supporting region (431) and a capsule-dropping region (432).

3. The dispensing device (1) as claimed in Claim 2, **characterized in that** said at least one push-pull rod (511) includes two said push-pull rods (511) spaced apart in a left-right direction, each of said push-pull rods (511) having a push-pull end (513), said sliding seat (3) having two sliding sidewalls (311) spaced apart in the left-right direction, each of said sliding sidewalls (311) having a slide guide slot (314), said pivot seat (5) further including two sliding pins (50) each connected to said push-pull end (513) of one of said push-pull rods (511) and extending slidably into said slide guide slot (314) of a corresponding one of said sliding sidewalls (311).

4. The dispensing device (1) as claimed in Claim 3, **characterized in that** said dispensing frame (4) includes two side rods (41) defining said capsule-dropping region (432), and a connecting rod (42) interconnecting front ends of said side rods (41) and defining said capsule-supporting region (431), each of said side rods (41) having a pulled portion (412), and a notch (414) adjacent to said pulled portion (412), said at least one control member (523) including two said control members (523) spaced apart in the left-right direction, said control members (523) respectively engaging said pulled portions (412) of said side rods (41) when said dispensing device (1) is in the brewing position, and respectively sliding out of said notches (414) of said side rods (41) to disengage from said pulled portions (412) of said side rods (41) when said dispensing device (1) is shifted from the brewing position to the dispensing position.

5. The dispensing device (1) as claimed in Claim 4, **characterized in that** said pulled portion (412) of each of said side rods (41) has an inclined surface (417) extending downwardly and inclinedly from a top thereof, and each of said control members (523) has an inclined surface (524) extending upwardly and inclinedly from a bottom thereof.

6. The dispensing device (1) as claimed in Claim 2, **characterized in that**:
said at least one push-pull rod (511) includes two said push-pull rods (511) spaced apart in a left-right direction, each of said push-pull rods (511) having a push-pull end (513), said push-pull end (513) having a hooking groove (514) and an inclined end face (515);
said dispensing frame (4) includes two side rods (41) defining said capsule-dropping region (432), and a connecting rod (42) interconnecting front ends of said side rods (41) and defining said capsule-supporting region (431), each of said side rods (41) having a pivot pin (416) controlled by said push-pull end (513) to move horizontally;
said dispensing device (1) further comprises a return spring (15) to return said dispensing frame (4) from the inclined position to a horizontal position on said sliding seat (3);
when said dispensing device (1) is shifted from the brewing position to the dispensing position, said inclined end faces (515) of said push-pull ends (513) of said push-pull rods (511) respectively push said pivot pins (416) of said side rods (41) to move rearward by overcoming a biasing force of said return spring (15); and
when said pivot pins (416) of said side rods (41) respectively pass over said inclined end faces (515) of said push-pull ends (513) of said push-pull rods (511), said pivot pins (416) are moved forwardly and respectively into said hooking grooves (514) of said push-pull ends (513) of said push-pull rods (511) because of the biasing force of said return spring (15).

7. The dispensing device (1) as claimed in Claim 2, **characterized in that** said fixed seat (2) has a first dropping hole (221), said sliding seat (3) having a second dropping hole (33) disposed above and registered with said first dropping hole (221), said capsule-dropping region (432) being located above and communicating with said first and second dropping holes (221, 33).

8. The dispensing device (1) as claimed in Claim 5, **characterized in that** said fixed seat (2) has a first dropping hole (221), said sliding seat (3) having a second dropping hole (33) disposed above and registered with said first dropping hole (221), said capsule-dropping region (432) being located above and communicating with said first and second dropping holes (221, 33).

9. The dispensing device (1) as claimed in Claim 8, **characterized in that** said fixed seat (2) includes two fixed sidewalls (21) respectively proximate to said sliding sidewalls (311) of said sliding seat (3), and a fixed bottom wall (22) having said first dropping hole (221), each of said fixed sidewalls (21) having a limiting slot (211) extending along the sliding direction (30), said sliding seat (3) including a main frame (31) having said sliding sidewalls (311), and a carrier frame (32) fixed to said main frame (31), said main frame (31) further having two limiting pins (316) respectively extending into said limiting slots (211) of said fixed sidewalls (21).

10. The dispensing device (1) as claimed in Claim 9,
**characterized in that** said carrier unit (11) further includes a main shaft (12) for pivotally mounting said pivot seat (5) on said fixed seat (2), and a torsion spring (13) sleeved on said main shaft (12) for biasing said pivot seat (5) to pivot along an opening direction (16).

11. The dispensing device (1) as claimed in Claim 10,
**characterized in that** said pivot seat (5) includes a cover frame (51) having said push-pull rods (511), and a brewing-supporting frame (52) connected to and covered by said cover frame (51) and having said control members (523).

12. The dispensing device (1) as claimed in Claim 10,
further **characterized by** an opening/closing mechanism (6) which includes a first locking member (62) pivotally mounted on said pivot seat (5), a second locking member (64) pivotally mounted on said pivot seat (5) in proximity to said first locking member (62), a locking spring (65) urging said first and second locking members (62, 64) to move toward a locking position, and a handle (66) mounted on said pivot seat (5) to control pivoting of said first locking member (62), said sliding seat (3) further having at least one engaging pin (34) mounted on said carrier frame (32), said first locking member (62) including at least one locking plate (621) for locking engagement with said second locking member (64), said locking plate (621) having an engaging portion (625) and a first retaining portion (626), said second locking member (64) having a second retaining portion (643) releasably engageable with said first retaining portion (626), wherein, when said dispensing device (1) is in the brewing position, said engaging portion (625) of said locking plate (621) engages said engaging pin (34) of said sliding seat (3) and said first and second retaining portions (626, 643) are spaced apart from each other, and when said dispensing device (1) is in the dispensing position, said first and second locking members (62, 64) are engaged to each other.

13. The dispensing device (1) as claimed in Claim 12,
**characterized in that** said carrier frame (32) has an unlocking piece (326) projecting upwardly therefrom, said second locking member (64) further having an unlocking portion (642) projecting toward said unlocking piece (326), and wherein, when said dispensing device (1) is shifted from the dispensing position to the brewing position, said pivot seat (5) is moved downward with said unlocking portion (642) being pushed by said unlocking piece (326) to cause disengagement between said first and second retaining portions (626, 643).
